**Europäisches Patentamt**

**European Patent Office**

**Office européen des brevets**

(11) Veröffentlichungsnummer: **0 062 359**
**B1**

# (12) EUROPÄISCHE PATENTSCHRIFT

(45) Veröffentlichungstag der Patentschrift:
**27.12.84**

(21) Anmeldenummer: **82103038.4**

(22) Anmeldetag: **07.04.82**

(51) Int. Cl.³: **A 01 D  35/20,** F 16 F  1/16,
F 16 F  1/14, G 05 G  1/00

(54) **Gefederter Schaltgriff.**

(30) Priorität: **07.04.81  DE 8110539 U**

(43) Veröffentlichungstag der Anmeldung:
**13.10.82 Patentblatt 82/41**

(45) Bekanntmachung des Hinweises auf die Patenterteilung:
**27.12.84 Patentblatt 84/52**

(84) Benannte Vertragsstaaten:
**AT BE CH FR LI LU NL**

(56) Entgegenhaltungen:
**DE - A - 2 124 924**
**DE - A - 2 229 366**
**DE - A - 2 529 635**
**DE - B - 1 501 215**
**DE - C - 945 883**
**FR - A - 2 268 450**
**US - A - 4 044 532**
**US - A - 4 231 555**

(73) Patentinhaber: **SABO Maschinenfabrik GmbH & Co KG,**
**Postfach 310 105,**
**D-5270 Gummersbach 31 Dieringhausen (DE)**

(72) Erfinder: **Brenner, Josef Hans, Ing. (grad.), Am**
**Fliederbusch 1, D-5063 Overath 7 (DE)**

(74) Vertreter: **Groening, Hans Wilhelm, Dipl.-Ing.,**
**Siebertstrasse 4 Postfach 860 340,**
**D-8000 München 86 (DE)**

## Beschreibung

Die Erfindung betrifft einen gefederten Schaltgriff für einen Rasenmäher, der über ein Zugseil mit dem Schalter eines Motors verbunden und durch eine Feder in Richtung seiner der Abschaltung des Motors entsprechenden Schwenkstellung vorgespannt ist.

Ein Schaltgriff der vorgenannten Gattung ist aus der US-A Nr. 4044532 bekannt. Bei dieser bekannten Vorrichtung besteht der Schaltgriff aus einem Winkelhebel, der an der Innenseite eines Holms mit seinem kürzeren Hebelende in der Ebene des Führungsbügels für den Rasenmäher schwenkbar gelagert ist. Das kürzere Hebelende ist mit einem Nocken versehen, der einen elektrischen Schalter an der Innenseite dieses Holms des Führungsbügels betätigt, wenn der lange Schenkel des Winkelhebels gegen die Innenseite des waagerechten Abschnitts des Führungsbügels gezogen wird. Der Winkelhebel ist durch eine Feder in Richtung seiner der Aus-Schaltstellung entsprechenden Ruhestellung vorgespannt, deren beiden Enden jeweils an dem Winkelhebel bzw. an einem mit dem Führungsbügel fest verbundenen Teil anliegen. Dementsprechend muss bei der Benutzung des Rasenmähers der Winkelhebel von der Bedienungsperson unter Überwindung der Kraft der genannten Feder ständig in der Ein-Schaltstellung gehalten werden. Um dabei eine bequeme Handhaltung zu ermöglichen, ist der Schaltgriff z.B. so ausgebildet, dass er sich in der Ein-Schaltstellung in seiner Form weitgehend an die Form des Rasenmäherholms anpasst, in der dieser beim Mähen mit den Händen erfasst wird. Die Konstruktion für den bekannten Schaltgriff ist relativ aufwendig. Die Feder muss der Drehachse entsprechend geformt sein und erfordert Widerlager am Holm und am Schaltgriff.

Der Erfindung liegt die Aufgabe zugrunde, einen gefederten Schaltgriff für einen Rasenmäher anzugeben, der gegenüber bekannten Schaltgriffen leichter und billiger herstellbar ist und trotzdem zuverlässig funktioniert.

Die Erfindung löst diese Aufgabe dadurch, dass die Feder eine Torsionsfeder ist, aus Kunststoff besteht und gleichzeitig als Drehachse für den Schaltgriff dient. Es hat sich überraschend gezeigt, dass die Torsionsfeder ohne Beeinträchtigung ihrer Dauerstandfestigkeit ausreichend elastisch ist.

Die Ausgestaltung des Schaltgriffs und der Torsionsfeder aus Kunststoff ermöglicht gemäss einem weiteren Merkmal ferner die einstückige Ausbildung beider Teile. In diesem Fall wird als Kunststoff ein Polyacetal wegen seiner besseren Federeigenschaften bevorzugt, das z.B. unter dem Warenzeichen Delrin von der Firma Du Pont de Nemours auf den Markt gebracht wird. Es ist aber auch ein Polypropylen geeignet. Die Ausbildung des gefederten Schaltgriffs aus Kunststoff hat ferner den Vorteil, dass keine Probleme wegen der erforderlichen elektrischen Isolation des Schalters und der Torsionsfeder auftreten.

In der Zeichnung ist die Erfindung beispielsweise und schematisch veranschaulicht. Es zeigen:

Fig. 1 eine perspektivische Ansicht eines Elektrorasenmähers mit einem gefederten Schaltgriff,

Fig. 2 den oberen Abschnitt des Holms des Rasenmähers gemäss Fig. 1 in vergrössertem Massstab und teilweise weggebrochen sowie

Fig. 3 eine einstückige Ausführungsform eines Schaltgriffs mit Torsionsfeder, teilweise im Schnitt.

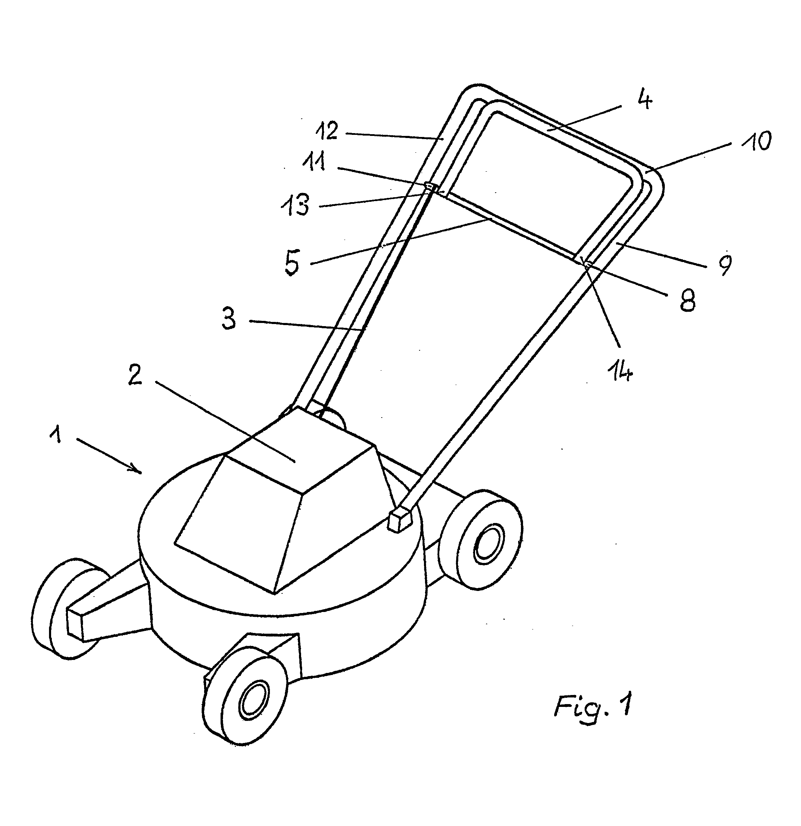

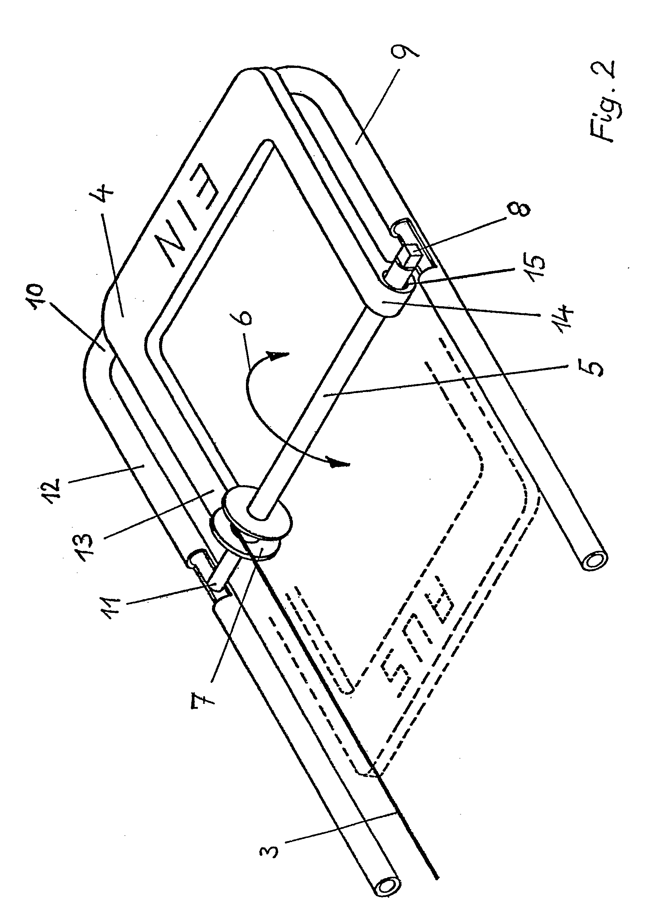

Gemäss Fig. 1 ist ein Rasenmäher 1 mit einem Elektromotor 2 ausgerüstet. Von einem (nicht dargestellten) Zugschalter am Elektromotor 2 führt ein Zugseil 3 zu einem U-förmigen Schaltgriff 4. Dieser ist um eine Achse, die koaxial zu einer Torsionsfeder 5 liegt, zwischen der in der Fig. 1 dargestellten Ein-Schaltstellung und einer dazu um etwa 180° versetzten Aus-Schaltstellung, die in der Fig. 2 mit gestrichelten Linien dargestellt ist, entsprechend dem Pfeil 6 schwenkbar.

Gemäss Fig. 2 ist das dem Schaltgriff 4 zugewandte Ende des Zugseils 3 an einer Rolle 7, die mit der Torsionsfeder 5 fest verbunden ist, auf- und abwickelbar befestigt.

Die Torsionsfeder 5 ist als Rundstab ausgebildet, der an seinem einen Ende 8 zu einem Vierkant abgeflacht und mit diesem an einem Schenkel 9 eines Holms 10 des Rasenmähers befestigt ist. Das andere Ende 11 der Torsionsfeder 5 ist in einem Schenkel 12 des Holms 10 drehbar gelagert. Zur Verdeutlichung sind in der Fig. 2 die Schenkel 9, 12 des Holms 10 dort aufgeschnitten, wo die Enden 8, 11 der Torsionsfeder 5 in den Holm 10 hineinragen.

Der U-förmige Schaltgriff 4 ist mit seinem einen Ende 13 in der Nähe des Endes 11 der Torsionsfeder 5 mit dieser fest verbunden. Das andere Ende 14 des Schaltgriffs 4 ist in der Nähe des Endes 8 der Torsionsfeder 5 auf dieser drehbar gelagert. Zu diesem Zweck ist das Ende 14 des Schaltgriffs 4 verdickt und weist eine Bohrung 15 auf, durch die die Torsionsfeder 5 hindurchgeführt ist. Die Bohrung 15 hat einen etwas grösseren Durchmesser als die Torsionsfeder 5, so dass an dieser Stelle der Schaltgriff 4 gegenüber der Torsionsfeder leicht verdrehbar ist.

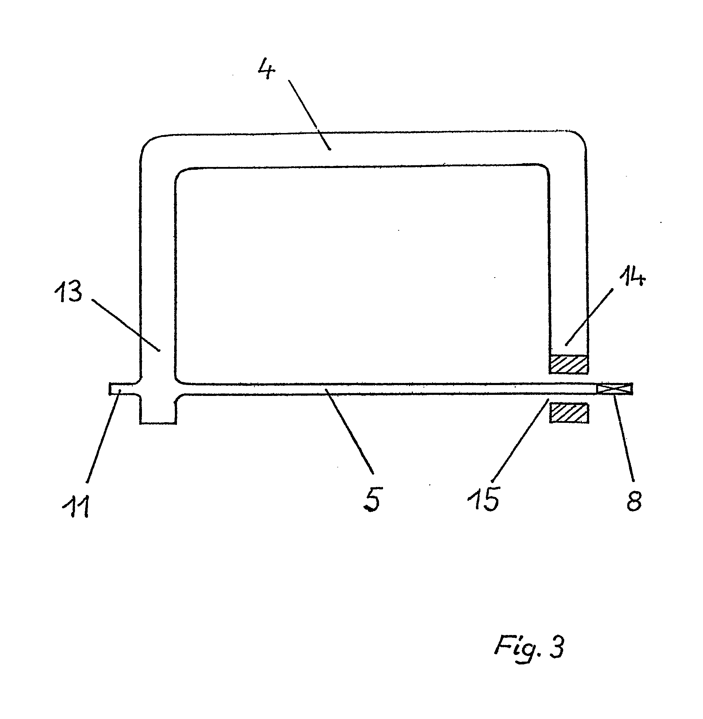

In der Fig. 3 ist ein Schaltgriff in einstückiger Ausbildung dargestellt. Dabei ist das Ende 13 des Schaltgriffs 4 in der Nähe des Endes 11 der Torsionsfeder 5 unmittelbar an diese angeformt. Das andere Ende 14 des Schaltgriffs 4 in der Nähe des Endes 8 der Torsionsfeder 5 ist zur Verdeutlichung der Bohrung 15 im Schnitt gezeigt. Das Ende 8 der Torsionsfeder 5 ist als Vierkant ausgebildet.

Wenn der Rasenmäher nicht benutzt wird, liegt der Schaltgriff 4 durch die Einwirkung der Torsionsfeder 5 in der Aus-Schaltstellung, die in der Fig. 2 mit gestrichelten Linien dargestellt ist. Zum Einschalten des Elektromotors 2 des Rasenmähers wird der Schaltgriff 4 um etwa 180° nach oben in die Ein-Schaltstellung geschwenkt, die aus den Fig. 1 und 2 ersichtlich ist. Bei diesem Schwenken wird das Zugseil 3 um einen entsprechenden Längenabschnitt um die Rolle 7 gewickelt und betätigt dabei den Schalter des Elektromotors 2. Die Ein-Schaltstellung des Schaltgriffs 4 bleibt nur so lange bestehen, wie der Schaltgriff 4 von der Bedienungsperson in dieser Stellung gehalten wird. Beim Loslassen des Schaltgriffs 4 schwenkt dieser durch die Wirkung der Torsionsfeder 5 automatisch in die Aus-Schaltstellung zurück. Dadurch wird das Zugseil wieder um einen entsprechenden Längenabschnitt von der Rolle 7 abgewickelt und veranlasst die Abschaltung des Elektromotors 2.

Selbstverständlich kann der Rasenmäher anstelle des Elektromotors auch einen Benzinmotor aufweisen. In diesem Fall wird z.B. über den gefederten Schaltgriff 4 und das Zugseil 3 ein Schalter zum Ein- und Ausschalten des Zündstroms betätigt, während ein zusätzlicher Schalter für das Ein- und Ausschalten des Anlassermotors vorgesehen ist. Der letztgenannte zusätzliche Schalter kann auch durch ein Zeitrelais ersetzt sein, das bei Inbetriebnahme des Rasenmähers durch den Schaltgriff 4 gleichzeitig mit dem Schalter für den Zündstrom eingeschaltet wird und nach einer vorgegebenen Zeit selbsttätig den Anlassermotor abschaltet.

**Patentansprüche**

1. Gefederter Schaltgriff für einen Rasenmäher, der über ein Zugseil (3) mit dem Schalter eines Motors (2) verbunden und durch eine Feder (5) in Richtung seiner der Abschaltung des Motors (2) entsprechenden Schwenkstellung vorgespannt ist, dadurch gekennzeichnet, dass die Feder eine Torsionsfeder (5) ist, aus Kunststoff besteht und gleichzeitig als Drehachse für den Schaltgriff dient.

2. Schaltgriff nach Anspruch 1, dadurch gekennzeichnet, dass der Schaltgriff (4) und die Torsionsfeder (5) einstückig aus einem Kunststoff bestehen.

3. Schaltgriff nach einem der Ansprüche 1 oder 2, dadurch gekennzeichnet, dass der Kunststoff ein Polyacetal oder ein Polypropylen ist.

**Claims**

1. Spring-loaded switch grip for a lawn-mower which grip is connected via a tension cable (3) to the switch of a motor (2) and is prestressed by means of a spring (5) in the direction of its pivoted position which corresponds to switching off the motor (2), characterised in that the spring is a torsion spring (5), consists of plastic and at the same time serves as the axle of rotation for the switch grip.

2. Switch grip according to Claim 1, characterised in that the switch grip (4) and the torsion spring (5) are integral with one another and consist of a plastic.

3. Switch grip according to Claim 1 or 2, characterised in that the plastic is a polyacetal or a polypropylene.

**Revendications**

1. Poignée de commutation montée élastiquement, destinée à une tondeuse à gazon, reliée par l'intermédiaire d'un câble de traction (3) au commutateur d'un moteur (2) et soumise à une précharge par un ressort (5), en direction de sa position prise par pivotement qui correspond à la mise à l'arrêt du moteur (2), caractérisée par le fait que le ressort est un ressort de torsion (5) qui consiste en une matière plastique et sert simultanément d'axe de rotation à la poignée de commutation.

2. Poignée de commutation selon la revendication 1, caractérisée par le fait que cette poignée de commutation (4) et le ressort de torsion (5) sont fabriqués d'un seul tenant en une matière plastique.

3. Poignée de commutation selon l'une des revendications 1 ou 2, caractérisée par le fait que la matière plastique est un polyacétal ou un polypropylène.

Fig. 1

Fig. 2

*Fig. 3*